# EUROPEAN PATENT SPECIFICATION

(11) **EP 1 300 036 B1**
(45) Date of publication and mention of the grant of the patent: **10.05.2006**
(21) Application number: 01947421.2
(22) Date of filing: 28.06.2001
(51) Int. Cl.: H04Q 7/24

(54) **Mobile communications device and method for connecting to an internet site**
Mobiles Kommunikationsgerät und Verfahren zum Verbinden mit einer Internet-Site
Dispositif de télécommunication mobile et procédé de connexion à un site internet

(30) Priority: 30.06.2000 GB 0016175
(43) Date of publication of application: 09.04.2003
(73) Proprietor: MOTOROLA, INC., Schaumburg, IL 60196 (US)
(72) Inventor: FREEMAN, David, Nigel, Basingstoke, Hampshire RG22 4TX (GB)
(74) Representative: Cross, Rupert Edward Blount
(86) International application number: PCT/EP2001/007397
(87) International publication number: WO 2002/003731

(56) References cited:
- EP-A- 0 844 797
- WO-A-00/07403
- WO-A-97/17816
- WO-A-98/52363

## Description

### Field of the Invention

This invention relates to wireless communications systems. More specifically, this invention relates to a method of connecting a mobile communication device to an internet site.

### Background of the Invention

Wireless communications systems typically comprise a number of radios, which may be linked together in a variety of ways. These 'radios' may be mobile 'phones. They may alternatively be mobile or portable radios, usually referred to as'PMR' radios. The term mobile station (MS) will be used henceforth for mobile telephones and portable- or mobile radios.

The mobile stations may communicate through base stations of the system. Each base station typically serves a cell of the wireless communications system. The base stations offer interconnection either to the fixed line telephone system ('POTS'), or to other mobile stations in the system. Mobile stations that communicate through base stations may or may not be in the same cell of the network. Alternatively, mobile stations may communicate directly with one another, in 'direct mode' communication.

Different countries have different wireless communications systems. When a mobile station is situated within a foreign country, its calls can be charged via its home system (or service provider). As a result, when in a foreign country, a user normally incurs significant call rate supplements when using the mobile station.

In recent times, Wireless Application Protocol (WAP) access to the internet has been made available to mobile stations, such as mobile telephones and laptop computers. To gain access to the internet, a WAP mobile station needs to contact its Internet Service Provider (ISP), which provides access to a WAP server.

The ISP access from the mobile station end is handled as a normal data call. This means, for example, that a subscriber from England with an ISP access in England would pay for an International data call, when that subscriber wants to use WAP whilst roaming in a foreign country.

As will be appreciated, the cost of an International call can be a serious deterrent to a subscriber who wants to use WAP whilst roaming in a foreign country. Hence, ways of avoiding such expense would be desirable, to enable WAP access to the internet to become more common.

At present, one proposal has been put forward wherein a subscriber is to have a secondary set of ISP details loaded into the mobile station immediately prior to a foreign visit. This will allow the use of a local number in the country to which the mobile station has roamed, thereby removing the need for an International call. Once the communication is connected to the internet via the local ISP, the call traffic would be handled as for other internet traffic, with no differential tariff for distance. This is one possible solution to the present problem.

With the aforementioned solution to the problem of WAP access, information relating to foreign ISP access is specifically stored in a mobile station prior to travel. This information will include the local phone number, user ID, password and, if access is to be via a modem, the data rate and timeout before a retry. The mobile station uses this information to make a normal circuit switched data call to the local ISP in the foreign country. To do this, the mobile station dials the relevant number, just as would be the case where normally connecting through a home ISP and logging on in the same way. The foreign ISP access serves as a gateway into the internet. Then, in the traffic band, the internet protocol (IP) address of the home WAP server is sent from the mobile station along with the necessary user information, to ensure security and to customise the WAP service for the specific user.

Although the aforementioned solution overcomes the problem of international call cost, it has the significant drawback of requiring ISP details to be loaded into the mobile station prior to WAP usage when travelling. With such an arrangement, such details might remain in a mobile station long after they have become out of date. Hence, the proposed solution is not ideal.

In the prior art document (EP0912027) disclosed solution is about accessing internet site via a local service provider in a packet switched network but operation as in the invention now to be described is not disclosed or suggested in the prior art.With the foregoing in mind, the present invention provides a method of connecting a mobile communications device to an internet site, such as a WAP server, in a very efficient fashion. The invention avoids the need for updating foreign internet service provider profiles prior to roaming WAP usage.

### Summary of the Invention

According to the present invention, there is provided a method of connecting a mobile communications device, such as a mobile station, to an internet site, such as a WAP server, as recited in claim 1 of the accompagnying claims.

As a result, access to a home WAP server, for example, can be achieved via a local rate call whilst a user roams abroad.

A novel feature of this invention is that the local service provider does not require a pre-registration by the user, yet provides internet access via its internet gateway and receives income for the WAP calls made by roaming users. These roaming users might otherwise avoid using WAP whilst roaming due to the extra cost of international calls.

Preferably, as the mobile communications device roams from country to country, the call is routed automatically via the service provider situated in the country in which the mobile communications device is located. As a result, a user only incurs the cost of a local call when accessing his home WAP server, thereby making WAP access more attractive to a user.

Preferably the call includes an information element which is interpreted automatically by the service provider mobile communications system as a request for access to the internet. This information element could take the form of a special code, rather like the "+ function" of GSM. Alternatively, this could in fact be a universal number, but a special code is probably preferable.

In a particular embodiment, the information element may include a number universally recognised in the countries to which the mobile communications device can roam. Local service providers would then automatically recognise this as "route to their own local internet access", and the call would be directed to the home WAP server. Hence, the service provider in the network to which the mobile station has roamed will be providing open access to their internet connection, but only for valid mobile phone subscribers who have been allowed to make calls anyway.

The call may include the address of the internet site, which address is routed via an internet gateway of the service provider. Further, a call preferably includes user ID and password information for gaining access to the internet site, following unhindered access to the internet via the service provider internet gateway.

A mobile communications device according to the present invention is likely to be a mobile telephone. However, other devices that roam from country to country, such as laptop computers with modems, may also benefit from the method of the present invention.

The present invention further provides systems and apparatus which implement the present invention. These systems and apparatus will preferably include means for generating an information element during a call set-up which is interpreted automatically by a local service provider in any participating country as a valid request for access to the internet.

### Brief Description of the Figures

A specific embodiment of the present invention is now described, by way of example only, with reference to the accompanying drawings. In the drawings:
Figure 1 illustrates the general scheme of a wireless communications system in accordance with the present invention; and
Figure 2 illustrates a mobile station (MS) for use in the method according to the present invention.

### Detailed Description of a Preferred Embodiment

The following description of the drawings relates to part of a wireless communications system 10 in one country only. Similar systems are present in other countries to which the mobile stations 2,4,6 can roam. Hence, the drawings and related description have been included simply to help understand the nature of a wireless communications system 10, and to set the scene for a method according to the present invention.

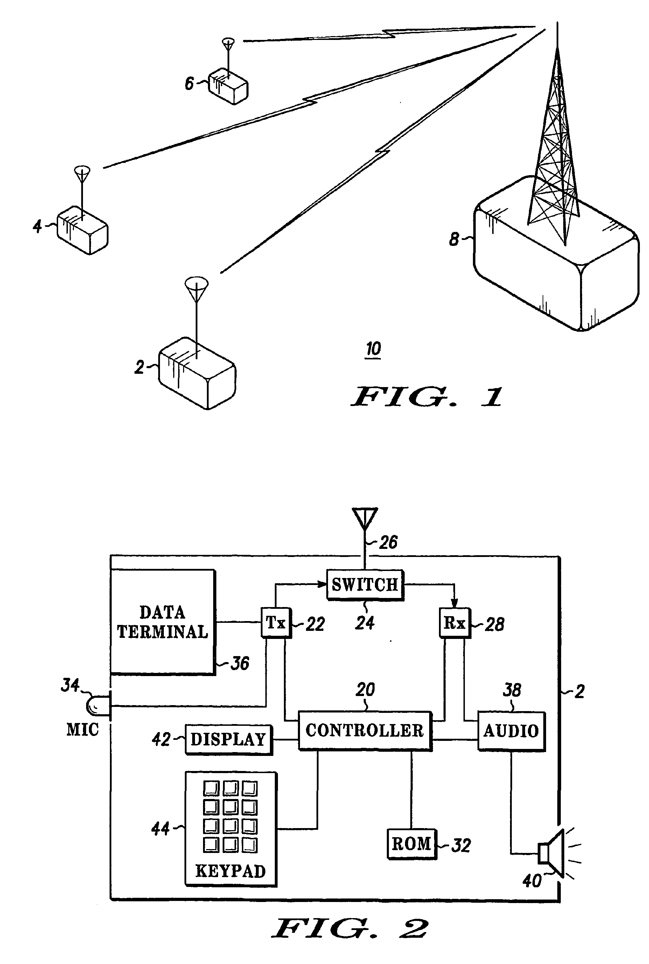

Figure 1 illustrates the general scheme of one example of a wireless communications system 10 in accordance with the present invention. Mobile stations 2, 4, 6 of Figure 1 can communicate with a base station 8. Mobile stations 2, 4, 6 could be mobile telephones. Alternatively, they could be PMR radios, i.e. portable radios or mobile radios mounted in vehicles.

Each of the mobile stations shown in Figure 1 can communicate through base station 8 with one or more other mobile stations. If mobile stations 2, 4, 6 are capable of direct mode operation, then they may communicate directly with one another or with other mobile stations, without the communication link passing through base station 8.

Figure 2 illustrates a mobile station (MS) of a general type which could be used in a method according to the present invention. The mobile station (MS) of Figure 2 is a radio communication device, and may be either a portable- or a mobile radio, or a mobile telephone.

The mobile station 2 of Figure 2 can transmit speech or other data from a user of the mobile station. The mobile station comprises a microphone 34 which can provide a signal for transmission by the mobile station. The signal from the microphone is transmitted by transmission circuit 22. Transmission circuit 22 transmits via switch 24 and antenna 26.

Mobile station 2 also has a controller 20 and a read only memory (ROM) 32. Controller 20 may be a microprocessor.

ROM 32 is a permanent memory, and may be a non-volatile Electrically Erasable Programmable Read Only Memory (EEPROM). ROM 32 is connected to controller 20 via line 30.

The mobile station 2 of Figure 2 also comprises a display 42 and keypad 44, which enable a user to access and surf the internet using WAP, and hence serve as part of the user interface circuitry of the mobile station. At least the keypad 44 portion of the user interface circuitry may be activatable by the user. Voice activation of the mobile station may also be employed. Similarly, other means of interaction with a user may be used, such as for example a touch sensitive screen.

Signals received by the mobile station are routed by the switch to receiving circuitry 28. From there, the received signals are routed to controller 20 and audio processing circuitry 38. A loudspeaker 40 is connected to audio circuit 38, and forms a further part of the user interface. The controller 20 is also connected to the display 42 for displaying internet information.

A data terminal 36 may be provided. Terminal 36 would provide a signal comprising data for transmission by transmitter circuit 22, switch 24 and antenna 26. Data received by receiving circuitry 28 may also be provided to terminal 36. The connection to enable this has been omitted from Figure 2 for clarity of illustration.

An explanation of a method according to the present invention will now be made.

The invention provides a universal access for WAP usage. Rather than having the details of an ISP loaded into a mobile station for WAP access, the mobile station is programmed with a special code or Information Element, rather like the "+ function" of GSM. With the "+ function" of GSM, the user can input "+" at the beginning of a telephone number to indicate that an international call dialling plan should be assumed. This would be instead of dialling the international access for the country from which the call is originated, i.e. "00" from UK or "011" from US. When dialling an international call with the "+function", a service provider system recognises immediately that the call is international, looks next for an international country code and directs the call as appropriate. In the present invention, the new special code, which will be generated automatically by the controller 20, will highlight for the service provider that internet access is required.

A mobile station with WAP universal access sends the special code details as part of the call set-up, and the system service provider interprets this as "route to their own local internet access". Such a connection would work for roaming subscribers in foreign countries in the same way as it would for home subscribers by providing access to the local internet service provider. This arrangement would reduce the cost of the call significantly, thereby improving the popularity of the service.

With the present invention, each mobile network operator (or service provider) in fact acts as an Internet Service Provider (ISP) as well. The ISPs in the various foreign countries use the internet gateway for their own subscribers, and extend this to roaming subscribers who are authorised to have such internet access in accordance with the present invention.

By encouraging use of WAP whilst roaming in this way, the 'roamed to' foreign network operator/service provider will receive income for the WAP calls made by the roaming users, who otherwise might avoid using WAP whilst roaming. In addition, mobile commerce opportunities are enhanced by more popular usage of the service whilst roaming. Bilaterial agreement would therefore benefit both parties.

During call set-up, instead of calling the number of an ISP and logging on with ID and password, either a special and universal number is dialled, or the set-up includes a new Information Element. The local network interprets either of these as a call to the internet, and the network operator connects the phone call to their internet gateway, through the data IWF (inter-working function). The mobile station will then continue by sending the IP address of its home WAP server, ID and password, as in the normal case for WAP server access. The 'roamed to' network operator will be providing open access to their internet connection, but only for valid mobile phone subscribers who have been allowed to make calls. The call will be charged for, but at a 'local' rather than an 'international' rate.

As will be appreciated, a roaming mobile station user is given the benefit of cheaper WAP access, whilst foreign network service providers would benefit by increased calls due to the roaming users accessing their WAP server to a greater extent.

## Claims

1. A method of connecting a mobile communications device (2, 4, 6) to an internet site, wherein a call from the mobile communications device (2, 4, 6) to the internet site is routed automatically via a local service provider irrespective of location of the mobile communications device, **characterized by** said method including the step of initiating a call including an information element from the mobile communications device, the information element being interpreted automatically by the service provider as a request for access to the internet.

2. A method as claimed in claim 1, wherein the internet site is a WAP server.

3. A method as claimed in claim 1 or claim 2, wherein, as the mobile communications device (2, 4, 6) roams from country to country, the call is routed automatically via the service provider situated in the country in which the mobile communications device is located.

4. A method as claimed in claim 1, 2 or 3, wherein the information element includes a number universally recognised in the countries through which the mobile communications device can roam.

5. A method as claimed in any preceding claim, wherein a call includes the address of the internet site and is routed via an internet gateway of the service provider.

6. A method as claimed in any preceding claim, wherein the call includes user ID and password information for gaining access to the internet site following unhindered access to the internet via the service provider internet gateway.

7. A method as claimed in any preceding claim, wherein the mobile communications device (2, 4, 6) is a mobile telephone, or a laptop computer with modem facility.

8. A system or apparatus for implementing the method of any preceding claim, **characterized by** comprising means for generating an information element which is interpreted automatically by a local service provider as a request for access to the internet.

## Patentansprüche

1. Verfahren zum Verbinden einer mobilen Kommunikationsvorrichtung (2, 4, 6) mit einer Internet-Website, wobei ein Anruf von der mobilen Kommunikationsvorrichtung (2, 4, 6) bei der Internet-Website automatisch über einen lokalen Dienstanbieter unabhängig von der Position der mobilen Kommunikationsvorrichtung geleitet wird, **dadurch gekennzeichnet, dass** das Verfahren den Schritt des Starts eines Anrufs umfasst, welcher ein Informationselement von der mobilen Kommunikationsvorrichtung aufweist, wobei das Informationselement automatisch von dem Dienstanbieter als Anfrage nach einem Internetzugang interpretiert wird.

2. Verfahren nach Anspruch 1, **dadurch gekennzeichnet, dass** die Internet-Website ein WAP-Server ist.

3. Verfahren nach Anspruch 1 oder 2, **dadurch gekennzeichnet, dass** der Anruf automatisch über den Dienstanbieter, der in dem Land sitzt, in welchem sich die mobile Kommunikationsvorrichtung befindet, geleitet wird, wenn die mobile Kommunikationsvorrichtung (2, 4, 6) von Land zu Land zwischen Versorgungsbereichen von Basisstationen wechselt.

4. Verfahren nach Anspruch 1, 2 oder 3, **dadurch gekennzeichnet, dass** das Informationselement eine Nummer aufweist, die universell in den Ländern erkannt wird, in welchen die mobile Kommunikationsvorrichtung roamen oder zwischen Versorgungsbereichen von Basisstationen wechseln kann.

5. Verfahren nach einem der vorhergehenden Ansprüche, **dadurch gekennzeichnet, dass** ein Anruf die Adresse der Internet-Website einschließt und über einen Internet-Netzübergang des Dienstanbieters geleitet wird.

6. Verfahren nach einem der vorhergehenden Ansprüche, **dadurch gekennzeichnet, dass** der Anruf eine Benutzer-ID und Passwortinformationen aufweist, um Zugang zu der Internet-Website zu erlangen, welchem der ungehinderte Zugang zum Internet über den Internet-Netzübergang des Dienstanbieters folgt.

7. Verfahren nach einem der vorhergehenden Ansprüche, **dadurch gekennzeichnet, dass** die mobile Kommunikationsvorrichtung (2, 4, 6) ein Mobiltelefon oder ein Laptop-Computer mit Modemeinrichtung ist.

8. System oder Vorrichtung zur Ausführung des Verfahrens nach einem der vorhergehenden Ansprüche, **dadurch gekennzeichnet, dass** das System oder die Vorrichtung eine Vorrichtung zur Erzeugung eines Informationselements, das von einem lokalen Dienstanbieter automatisch als Anfrage nach einem Internetzugang interpretiert wird, aufweist.

## Revendications

1. Procédé de connexion d'un dispositif de communication mobile (2, 4, 6) à un site Internet, dans lequel un appel allant du dispositif de communication mobile (2, 4, 6) au site Internet est routé automatiquement via un fournisseur de services local, indépendamment de l'emplacement du dispositif de communication mobile, **caractérisé par** ledit procédé comprenant l'étape consistant à passer un appel comprenant un élément d'information à partir du dispositif de communication mobile, l'élément d'information étant interprété automatiquement par le fournisseur de services comme une requête pour accéder à Internet.

2. Procédé tel que revendiqué dans la revendication 1, dans lequel le site Internet est un serveur WAP.

3. Procédé tel que revendiqué dans la revendication 1 ou la revendication 2, dans lequel, lorsque le dispositif de communication mobile (2, 4, 6) se déplace de pays en pays, l'appel est routé automatiquement via le fournisseur de services situé dans le pays dans lequel le dispositif de communication mobile est situé.

4. Procédé tel que revendiqué dans les revendications 1, 2 ou 3, dans lequel l'élément d'information comprend un nombre universellement reconnu dans les pays à travers lesquels le dispositif de communication mobile peut se déplacer.

5. Procédé tel que revendiqué dans l'une quelconque des revendications précédentes, dans lequel un appel comprend l'adresse du site Internet et est routé via une passerelle Internet du fournisseur de services.

6. Procédé tel que revendiqué dans l'une quelconque des revendications précédentes, dans lequel l'appel comprend un identifiant d'utilisateur et des informations de mot de passe pour octroyer l'accès au site Internet à la suite d'un accès libre à Internet via la passerelle Internet du fournisseur de services.

7. Procédé tel que revendiqué dans l'une quelconque des revendications précédentes, dans lequel le dispositif de communication (2, 4, 6) est un téléphone mobile ou un ordinateur portable disposant d'un modem.

8. Système ou appareil pour implémenter le procédé de l'une quelconque des revendications précédentes, **caractérisé en ce qu'**il comprend des moyens pour générer un élément d'information qui est interprété automatiquement par un fournisseur de services local comme une requête pour accéder à Internet.
